Europäisches Patentamt

European Patent Office

Office européen des brevets

(11) Numéro de publication: **0 267 061**
**A1**

## (12) DEMANDE DE BREVET EUROPEEN

(21) Numéro de dépôt: 87402080.3

(22) Date de dépôt: 17.09.87

(51) Int. Cl.⁴: **F 16 H 1/22**
**F 16 H 1/16**

(30) Priorité: 07.10.86 FR 8613946

(43) Date de publication de la demande:
11.05.88 Bulletin 88/19

(84) Etats contractants désignés: **AT DE ES GB IT**

(71) Demandeur: **ENGRENAGES ET REDUCTEURS CITROEN - MESSIAN - DURAND Société Anonyme**
**3 rue Latécoère**
**F-78140 Velizy-Villacoublay (FR)**

(72) Inventeur: **Landois, François**
**135 rue du 4 septembre**
**F-58600 Fourchambault (FR)**

**Millard, Jean-Claude**
**12 rue Creuse**
**F-58000 Nevers (FR)**

(74) Mandataire: **Lancepiaine, Jean-Claude et al**
**CABINET LAVOIX 2, Place d'Estienne d'Orves**
**F-75441 Paris Cedex 09 (FR)**

(54) **Réducteur à couple divisé.**

(57) Conformément à l'invention, le réducteur à couple divisé comportant une roue dentée (8) montée sur un arbre de sortie (9) et entraînée en rotation par une ou plusieurs paires de pignons (30a, 30b), chaque pignon (30a, 30b) étant entrainé par un chaîne cinématique (20a, 20 b) dont les éléments grande vitesse sont constitués par des couples à roue tantente (22a, 22b) et vis sans (4a, 4b) est caractérisé en ce que chaque couple à roue (22a, 22b) et vis sans fin (4a, 4b) est monté dans un bâti flottant, ces bâtis (31a, 31b) étant reliés entre eux par paire par une barre de liaison (40) travaillant en traction-compression, les extrémités des vis sans fin (4a, 4b) se faisant face étant reliées par un cardan (5) et l'autre extrémité de l'une des vis sans fin étant connectée à un arbre moteur (2) perpendiculaire à l'arbre de sortie (9).

FIG.1

## Description

Réducteur à couple divisé

La présente invention se rapporte à un réducteur à couple divisé d'entraînement d'une roue dentée par plusieur chaînes cinématiques à partir d'un seul arbre d'entraînement.

La réduction maximum de l'encombrement des équipements a conduit de nombreux constructeurs de transmissions mécaniques à concevoir des réducteurs à couple divisé. En effet, chaque fois que des couples importants doivent être transmis et que l'on dispose d'un encombrement réduit, il est intéressant de diviser la puissance de la machine motrice sur différents flux d'efforts se regroupant en fin de chaîne cinématique sur le même organe de sortie.

Ce concept exige la division de la puissance totale transmise à l'organe de sortie finale par le nombre de chaînes cinématiques, à l'aide de dispositifs mécaniques divers qui réalisent cette division de puissance avec une exactitude qui dépend de plusieurs paramètres liés à la construction de l'organe de division tels que sa masse, sa position dans la chaîne cinématique, les frottements engendrés en fonctionnement etc...

L'objet de l'invention est de fournir un dispositif qui soit particulièrement compact et qui procure une grande réduction et un bon rendement mécanique pour l'entraînement d'un organe de sortie par plusieurs chaînes cinématiques distinctes, reliées entre elles par un organe de division de puissance.

La présente invention a pour objet un réducteur à couple divisé comportant une roue dentée montée sur un arbre de sortie et entraînée en rotation par au moins une paire de pignons, chaque pignon étant entraîné par une chaîne cinématique dont les éléments grande vitesse sont constitués par des couples à roue tangente et vis sans fin, caractérisé en ce que chaque couple à roue et vis sans fin est monté dans un bâti flottant, ces bâtis étant reliés entre eux par paire par une barre de liaison tavaillant en traction ou compression, les extrémités des vis sans fin se faisant face étant reliées par une liaison à cardan ou analogue et l'autre extrémité de l'une des ces vis sans fin étant connectée à un arbre moteur perpendiculaire à l'arbre de sortie.

Selon une autre caractéristique, la barre de liaison est inclinée par rapport à l'axe des vis sans fin et est reliée à chacun des bâtis flottants par une rotule en un point situé à égale distance des axes des roues de chaque couple à roue et vis sans fin.

L'invention sera mieux comprise à l'aide de la description qui va suivre, donnée uniquement à titre d'exemple, et faite en se referant aux dessins annexés, sur lesquels :

- la Fig. 1 est une vue en élévation du réducteur conforme à l'invention,
- la Fig.2 est une vue en coupe selon la ligne 2-2 de la Fig. 1,
- la Fig. 3 est une vue en coupe selon la ligne 3-3 de la Fig. 1,
- les Figs. 4 et 5 sont deux vues schématiques montrant deux variantes d'un élément élastique pouvant équiper la barre de liaison reliant les bâtis flottants des deux chaînes cinématiques du réducteur,
- la Fig. 6 est une vue en élévation du réducteur, conforme à l'invention, muni d'un organe de rattrapage de jeu.

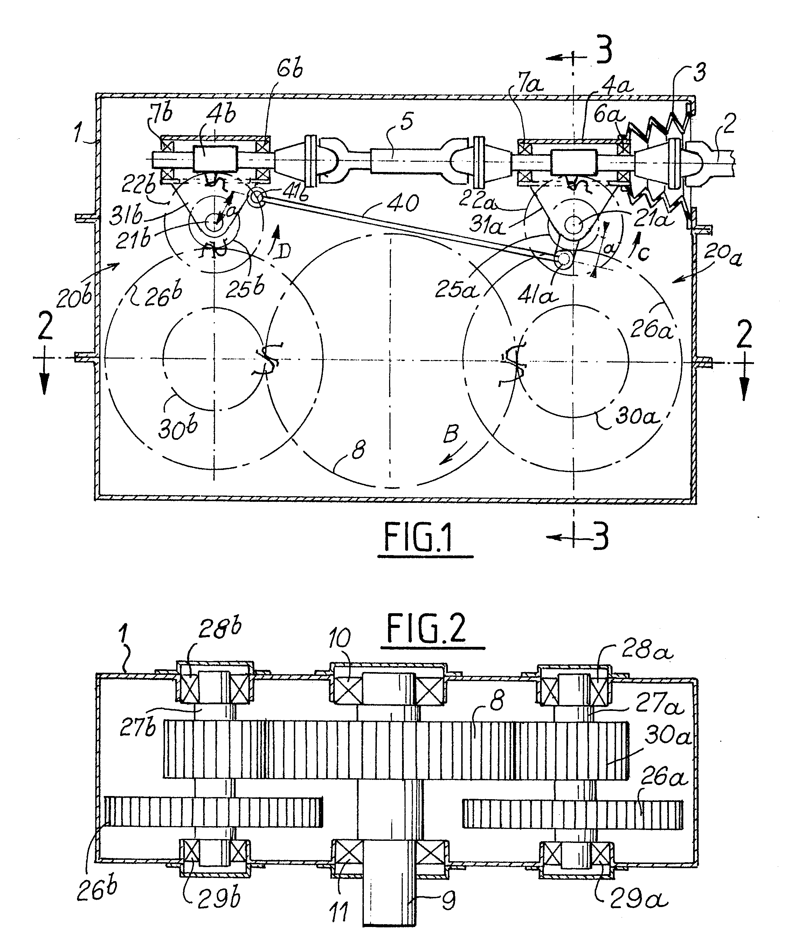

En se reportant aux Figs. 1 à 3, on voit que le réducteur comporte un carter principal 1 dans lequel débouche un arbre d'entrée 2 accouplé en rotation par exemple à un moteur d'entrainement, non représenté, ou à tout autre réduction primaire. Le franchissement de la paroi du carter principal 1 par l'arbre d'entrée 2 est réalisé par un soufflet élastique étanche 3.

L'arbre d'entrée 2 entraîne en rotation, à l'intérieur du carter principal 1, deux vis sans fin 4a et 4b se faisant face et qui sont reliées entre elles par un accouplement à cardan 5. La connexion entre le moteur d'entraînement, non représenté, et les vis sans fin 4a et 4b, par l'intermédiaire de l'arbre d'entrée 2, peut être réalisée par l'une ou l'autre des extrémités desdites vis sans fin.

La vis sans fin 4a est supportée par deux paliers respectivement 6a, 7a, et la vis sans fin 4b est également supportée par deux paliers 6b et 7b.

Le carter principal 1 contient également une roue dentée 8 droite ou hélicoïdale montée sur un arbre 9 tourillonnant dans le carter 1 par l'intermédiaire de paliers 10 et 11. L'arbre 9 est perpendiculaire à l'arbre d'entrée 2 et constitue l'arbre de sortie du réducteur.

La transmission de puisssance entre l'arbre d'entrée 2 grand vitesse et l'arbre de sortie 9 s'effectue par l'intermédiaire de deux chaînes cinématiques identiques 20a et 20b.

La chaîne cinématique 20a comporte un axe 21a sur lequel est fixée une roue dentée tangente 22a qui engrène avec la vis sans fin 4a. L'axe 21a tourillonne dans deux paliers 23a et 24a disposés dans le carter principal 1, et supporte également un pignon 25a qui engrène sur une couronne dentée 26a.

Cette couronne dentée 26a est montée sur un axe 27a qui tourillonne dans deux paliers 28a et 29a disposés dans le carter principal 1 et qui supporte un pignon 30a engrenant avec la roue dentée de sortie 8.

La liaison entre la roue 22a et la vis sans fin 4a est réalisée par un bâti flottant 31a pouvant osciller autour de l'axe 21a du pignon 25a. Le bâti flottant 31a, comporte deux paliers 32a et 33a supportant la roue dentée 22a et les deux paliers 6a et 7a perpendiculaires supportant la vis sans fin 4a.

De manière identique, la chaîne cinématique 20b comporte un axe 21b sur lequel est fixée une roue dentée tangente 22b engrenant avec la vis sans fin 4b. L'axe 21b tourillonne dans deux paliers placés dans le carter principal 1, et supporte un pignon 25b qui engrène sur une couronne dentée 26b. Cette couronne 26b est montée sur un axe 27b tourillonnant dans deux paliers 28b et 29b et supportant un pignon 30b qui engrène avec la roue dentée de sortie 8.

La liaison entre la roue tangente 22b et la vis sans fin 4b est obtenue par un bâti flottant 31b pouvant osciller autour de l'axe 21b du pignon 25b. Le bâti flottant 21b comporte deux paliers supportant la roue dentée 22b et les deux paliers 6b et 7b perpendiculaires supportant la vis sans fin 4b.

Les bâtis flottants 31a et 31b sont réalisés en construction ultra-légère et n'ont qu'un rôle de support et non de carter, puisqu'ils sont eux même à l'intérieur du carter principal.

Par ailleurs, les bâtis flottants 31a et 31b sont reliés entre eux par une barre de liaison rigide 40 à l'aide de deux rotules 41a et 41b solidaires respectivement des bâtis flottants 31a et 31b, et située à égale distance "a" des axes 21a, 21b des pignons 25a, 25b et des roues 22a, 22b, comme on le voit sur la Fig. 1.

Pour un sens de couple transmis, par les vis sans fin 4a et 4b et les chaînes cinématiques 20a et 20b sur la roue de sortie 8, dans le sens de la flèche B, les contacts des dentures des chaînes cinématiques et en particulier l'action de la roue dentée 22a sur la vis sans fin 4a tendent à faire tourner le bâti flottant 31a dans le sens de la flèche C, autour de l'axe 21a de la roue 22a et l'action de contact de la roue dentée 22b sur la vis sans fin 4b tend à faire tourner le bâti flottant 31b dans le sens de la flèche D, autour de l'axe 21b de la roue 22b.

Ces deux bâtis 31a et 31b étant reliés entre eux par la barre de liaison 40 à égale distance des axes des pignons 25a et 25b, ne peuvent avoir que des couples de réactions identiques, ce qui implique des actions de contact entre d'une part le pignon 22a et la vis sans fin 4a et d'autre part le pignon 22b et la vis sans fin 4b identiques.

Si le couple transmis sur la couronne dentée de sortie 8 s'inverse, il est évident que tous les contacts de denture s'inversent, la barre de liaison 40 travaille ainsi soit à la traction, soit à la compression.

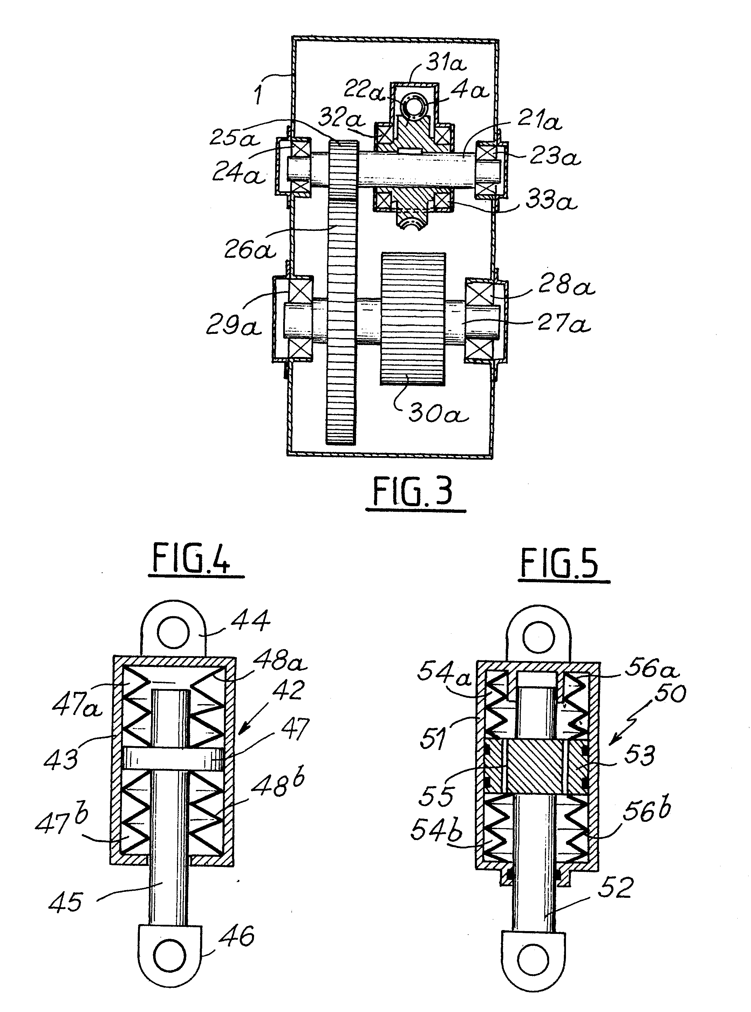

La barre de liaison rigide 40 peut être remplacée par un élément élastique axial 42 tel que représenté sur la Fig. 4. Cet élément élastique 42 se compose d'une enveloppe cylindrique 43 formant une chambre interne. L'enveloppe 43 est munie à l'une de ses extrémités d'un organe d'attache 44 à l'un des bâtis flottants par exemple 31a. Dans cette enveloppe 43 pénètre une tige 45 munie également d'un organe d'attache 46 relié à l'autre bâti flottant, par exemple 31b.

A l'intérieur de l'intérieur de l'enveloppe 43, la tige 45 comporte une bague 47 qui divise la chambre interne en deux demi chambres 47a et 47b dans chacune desquelles est placé un ressort de rappel respectivement 48a, et 48b prenant appui sur l'une des faces de la bague 47 et sur la paroi interne de l'enveloppe.

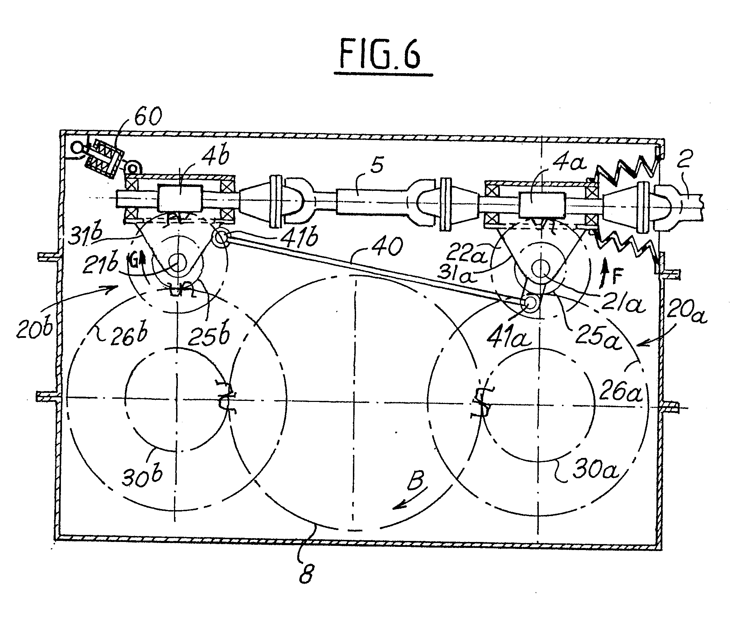

L'élément élastique monté sur la barre de liaison peut également être constitué par un vérin hydraulique 50 comme représenté sur la Fig. 5. Ce vérin hydraulique 50 comporte une enveloppe cylindrique 51 formant une chambre interne remplie de fluide. Dans cette enveloppe 51 pénètre une tige 52 munie d'un piston 53 qui divise la chambre interne en deux demi-chambres 54a et 54b. Le piston 53 est percé par des orifices 55 pour le passage du fluide d'une demi-chambre à l'autre au cours du déplacement de la tige 52. Dans chaque demi-chambre 54a et 54b est diposé un ressort de rappel respectivement 56a et 56b.

L'effort dans l'élément élastique 42, 50 étant directement proportionnel au couple sur la roue de sortie 8, cet élément élastique peut être utilisé comme un dynamomètre pour la mesure du couple ou être muni d'un contacteur-disjoncteur électrique agissant en limiteur de couple.

Grâce à la barre de liaison 40, on obtient une division parfaite de la puissance transmise par l'arbre d'entrée 2 sur les deux chaînes cinématiques 20a et 20b entraînant la roue 8 et la roue de sortie 9 et une rigidité torsionnelle ajustable par changement des caractéristiques élastiques de ladite barre de liaison. Dans le cas d'une précontrainte axiale de l'élément élastique de la barre de liaison, on obtient une rigidité torsionnelle fixe jusqu'à la valeur du couple transmis sur la roue de sortie 8 correspondant à la précontrainte de l'élément élastique et une rigidité variable en fonction du couple transmis lorsqu'on dépasse la précontrainte.

Du fait de la facilité de réglage de l'élément élastique sur la barre de liaison, ce dispositif perment, par modification de l'ajustement des caractéristiques dudit élément élastique, l'absorption de chocs et de vibrations aléatoires qui sont difficilement prévisibles sur les gros matériels industriels tels que les mécanismes de basculement de convertisseurs d'acierie, les commandes de chaînes d'agglomération ou les désintégrateurs, par exemple.

Dans l'exemple représenté à la Fig. 6, le réducteur est équipé d'un organe de rattrapage de jeu. Pour un fonctionnement sans jeu, il est nécessaire qu'une chaîne cinématique fonctionne sur le flanc de denture (homologue) et l'autre chaîne cinématique sur les flancs opposés (anti-homologue).

Dans cette configuration, les contacts, d'une part, entre la roue dentée 22a et la vis sans fin 4a et, d'autre part, entre la roue dentée 22b et la vis sans fin 4b tendent à faire tourner le bâti flottant 31a dans le sens de la flèche F et le bâti flottant 31b dans le sens de la flèche G. Pour maintenir ces contacts et leur donner une valeur prédéterminée un organe élastique de traction ou compression 60 est disposé entre le carter principal 1 et le bâti flottant 31b. Cet organe élastique 60 est constitué par un ressort, ou par un vérin pneumatique ou hydraulique ou par un vérin associé à un ressort. La barre de liaison 40 des deux bâtis flottants 31a et 31b est dans ce cas rigide.

**Revendications**

1. Réducteur à couple divisé comportant une roue denté (8) montée sur un arbre de sortie (9) et entraînée en rotation par au moins une paire de pignons (30a, 30b), chaque pignon (30a, 30b) étant entraîné par une chaîne cinématique (20a, 20b) dont les éléments grande vitesse sont constitués par des couples à roue (22a, 22b) et vis sans fin (4a, 4b) tangentes, caractérisé en ce que chaque couple à roue (22a, 22b) et vis sans fin (4a, 4b) est monté dans un bâti flottant (31a, 31b), ces bâtis étant reliés entre eux par paire par une barre de liaison (40) travaillant en traction ou compression, les extrémités des vis sans fin (4a, 4b) se faisant face étant reliées par une liaison à cardan (5) ou analogue et l'autre extrémité de l'une des vis sans fin étant connectée à un arbre moteur (2) perpendiculaire à l'arbre de sortie (9).

2. Réducteur à couple divisé selon la revendication 1, caractérisé en ce que la barre de liaison (40) est inclinée par rapport à l'axe des vis sans fin (4a, 4b) et est reliée à chacun des bâtis flottants (31a, 31b) par une rotule (41a, 41b) en un point situé à égale distance des axes (21a, 21b) des roues (22a, 22b).

3. Réducteur à couple divisé selon les revendications 1 et 2, caractérisé en ce que chaque bâti flottant (31a, 31b) comporte deux paliers supportant la roue dentée (22a, 22b) et deux paliers perpendiculaires supportant la vis sans fin (4a, 4b).

4. Réducteur à couple divisé selon la revendication 1, caractérisé en ce que des éléments des chaînes cinématiques (20a, 20b) sont montés à l'intérieur d'un carter fixe (1) comportant des paliers-supports pour tous lesdits éléments.

5. Réducteur à couple divisé selon les revendications 1 et 2, caractérisé en ce que la barre de liaison (40) est remplacée par un élément élastique (42) permettant de modifier la rigidité torsionnelle de l'ensemble.

6. Réducteur à couple divisé selon la revendication 5, caractérisé en ce que l'élément élastique (42) comporte un dispositif de mesure de couple.

7. Réducteur à couple divisé selon la revendication 5, caractérisé en ce que l'élément (42) comporte un interrupteur permettant de couper l'entraînement de l'arbre moteur (2) pour une valeur prédéterminée de la course dudit élément élastique (42) correspondant à une valeur du couple transmis à la roue de sortie (8).

8. Réducteur à couple divisé selon la revendication 5, caractérisé en ce que l'élément élastique (42) est muni d'un dispositif amortisseur hydraulique ou autre dispositif permettant d'absorber les chocs ou vibrations mécaniques.

9. Réducteur à couple divisé selon l'une des revendications 1 à 4, caractérisé en ce qu'il comporte un organe élastique (60) de traction ou de compresson placé entre le carter (1) et l'un des bâtis flottants (31a, 31b) pour un fonctionnement sans jeu jusqu'à une valeur prédéterminée du couple transmis sur la roue de sortie (8) correspondant à la valeur de réglage de la tension dudit organe élastique (60), la barre de liaison (40) des bâtis flottants (31a, 31b) étant rigide.

10. Réducteur à couple divisé selon la revendication 9, caractérisé en ce que l'organe élastique (60) est piloté par un vérin hydraulique ou autre moyen de commande.

0267061

26·10·87

FIG.1

FIG.2

0267061

FIG.3

FIG.4

FIG.5

0267061

# FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 198 590 (DURAND)<br>* Revendication 1; figure III * | 1,2 | F 16 H 1/22<br>F 16 H 1/16 |
| Y | | 3 | |
| Y | FR-A-1 085 428 (DURAND)<br>* Résumé; figures 1-3 * | 3 | |
| A | DE-B-1 014 811 (DURAND)<br>* Figures 1-4 * | 5-10 | |
| A | FR-A-1 305 474 (DURAND) | | |
| A | DE-A-2 211 619 (MANNESMANN-MEER AG) | | |

DOMAINES TECHNIQUES RECHERCHES (Int. Cl.4)

F 16 H

Le présent rapport a été établi pour toutes les revendications

| Lieu de la recherche | Date d'achèvement de la recherche | Examinateur |
|---|---|---|
| LA HAYE | 13-01-1988 | BEERNAERT J.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)